# EUROPEAN PATENT SPECIFICATION

(11) **EP 0 631 551 B1**
(45) Date of publication and mention of the grant of the patent: **14.05.1997**
(21) Application number: 93907935.6
(22) Date of filing: 29.03.1993
(51) Int. Cl.: B62B 13/12

(54) **SLEDGE**
SCHLITTEN
TRAINEAU

(30) Priority: 02.04.1992 GB 9207245
(43) Date of publication of application: 04.01.1995
(73) Proprietor: RAYMOND SIMS LIMITED, West Bridgford, Nottingham NG2 5FA (GB)
(72) Inventor: WHITE, Adrian Christopher, Ruddington, Nottingham NG11 6DA (GB)
(74) Representative: Jones, Stephen Anthony
(86) International application number: GB9300638
(87) International publication number: WO9319968

(56) References cited:
- DE-A- 746 677
- DE-A- 3 444 428
- DE-A- 3 701 252
- FR-A- 2 187 370
- US-A- 3 190 671
- US-A- 4 219 207

## Description

The present invention relates to sledges.

Conventionally, sledges comprise two runners connected to a rigid body upon which a person may sit or lie. The runners are fixed relative to one another, and each have a lower surface which can slide over snow, ice or other suitable surfaces.

A problem with known sledges is the inherent lack of manoeuvrability, and difficulty of changing direction of travel.

DE-A-746677 discloses a sledge comprising two elongate ski members, having forward and rearward ends, said ski members being held in spaced-apart, side-by-side relationship and coupled together at a point intermediate said forward and rearward ends by a connecting device which serves as a seat for the user.

It is an object of the present invention to provide an improved sledge.

According to the present invention, there is provided a sledge comprising two elongate ski members having forward and rearward ends, said ski members being held in spaced-apart, side-by-side relationship and coupled together at a point intermediate said forward and rearward ends by a connecting device which serves as a seat for the user characterised in that said connecting device is flexible and said forward and rearward ends of said ski members are not coupled together, the arrangement being such that, in use, one ski member may be moved relative to the other by the user shifting his bodyweight and thereby flexing the flexible connecting device.

The sledge according to the invention is advantageous primarily in that the relative movement which is possible between the ski members enables the sledge to be manoeuvred more easily than is the case with conventional sledges. The sledge may be controlled simply by the user shifting his body weight, using skills similar to those used in skiing.

Preferably also, the forward ends of the ski members are provided with toe straps or other means for gripping the user's feet to facilitate control of the sledge.

Embodiments of the present invention will now be described by way of example only, and with reference to the accompanying drawings in which:
Figure 1 shows a plan view of a sledge according to the presently preferred embodiment of the present invention;
Figure 2 shows a side view of the embodiment of the sledge in Figure 1;
Figure 3 shows a plan view of a further embodiment of a sledge according to the present invention;
Figure 4 shows a perspective view of a further embodiment of a sledge according to the present invention;
Figure 5 shows a perspective view of a further embodiment of a sledge according to the present invention;
Figure 6 shows a sectional view along the line VI-VI in Figure 5;
Figure 7 shows a perspective view of a further embodiment of a sledge according to the present invention;
Figure 8 shows a perspective view of a sledge similar to that of Figure 7 having an alternative ski member fixing arrangement;
Figure 9 shows a perspective view on an enlarged scale of securing means for use with the embodiment of the sledge in Figure 8; and
Figure 10 shows a view on line X-X of Figure 9.

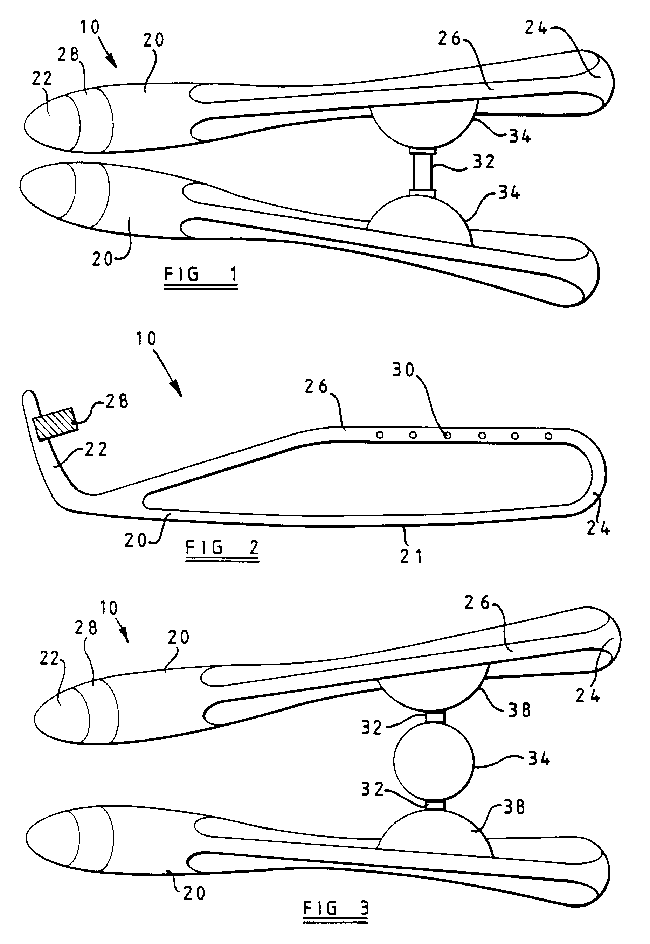

Referring now to Figures 1 and 2, there is shown a sledge 10 according to a presently preferred embodiment of the present invention, comprising two ski members 20 (or "runners") each having a lower surface 21 for contact with the ground, a forward end 22 including a raised toe, a rearward end 24 or heel, and a support rail 26. A toe strap 28, or similar means for gripping the toe of a user of the sledge is provided toward the forward end 22 of the ski member 20. The ski members 20 may be constructed of any suitable rigid material or combination thereof, such as wood, metal, alloys or plastics.

The support rails 26 include a series of holes 30 suitable for the passing of bolts therethrough, in order to attach a connecting device 32,34 which, in the illustrated embodiment includes a link portion 32 and seat portions 34. The link portion 32 is preferably a flexible bar constructed from plastic material or the like. The link portion 32 may alternatively employ any one of a number of known techniques for flexibly coupling two items, such as a universal joint or rubber bush arrangement. The link portion 32 may alternatively be connected directly to each ski member 20, with seat portion(s) 34 provided separately.

The seat portions 34 are attached to the ski members 20 using bolts (not shown) passing through holes 30 in known manner. The series of holes 30 allows multiple fixing points and allows adjustment of the position of the seat 34 and link portion 32 longitudinally on the ski members 20 to facilitate use of the sledge 10 by persons of differing sizes.

The ski members 20 and link portion 32 are preferably mutually detachable for portability of the sledge.

The sledge may also be provided with separate "grab-handles" for the user of the sledge, positioned appropriately such as on the top of support rails 26.

In an alternative embodiment shown in Figure 3, there is shown a similar arrangement to that of Figures 1 and 2 in which a seat portion 34 is attached to the ski members 20 on each side by means of two link portions 32, and a mounting portion 38 which may be bolted to the ski members in similar fashion. Ski member 20 and mounting portion 38 may be integrally formed.

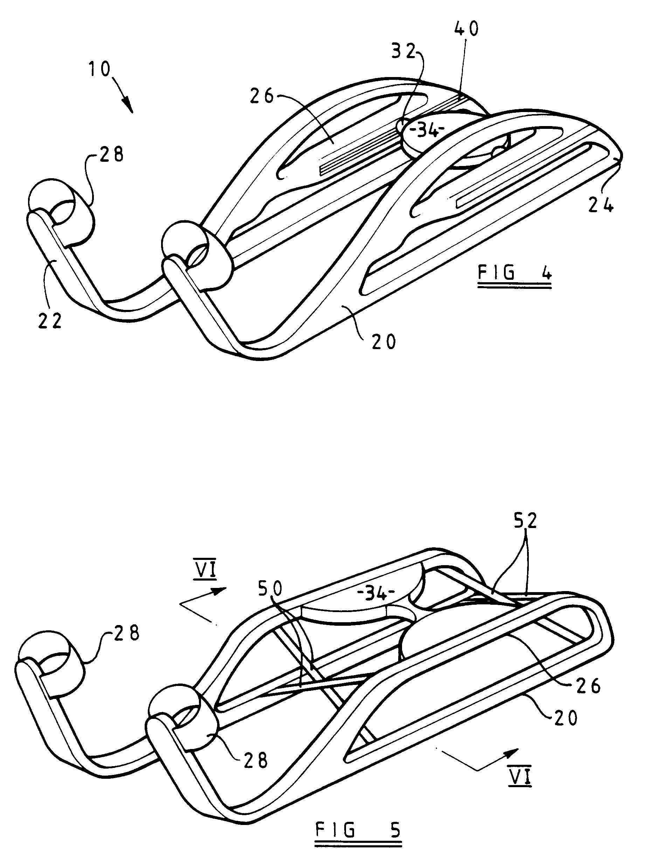

In Figure 4 there is shown a further embodiment in which flexible link portions 32 are slidably mounted on a track 40. Means (not shown) are provided to lock flexible link portions 32 into position longitudinally along the track in any one of a number of ways well known in the art.

In alternative embodiments, the mounting portions 38 may include a sprung suspension system or shock absorbing system of various known types, to insulate the seat 34 from transient vertical motion of ski members 20.

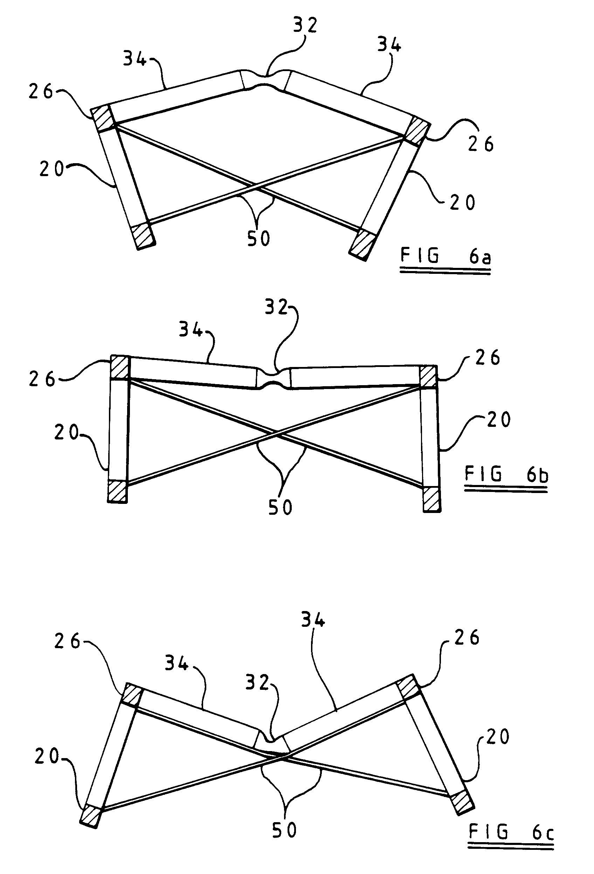

The embodiment shown in Figure 5 is broadly similar to that of Figures 1 and 2, save that pairs of connecting straps 50,52 are provided slightly forward and rearward of the seat portions 34. The straps 50,52 are of rubber material and connect the runner of each ski member 20 to the support rail 26 of the other.

Figure 6 shows how the straps 50,52 act to maintain the ski members 20 in the optimum relative position. Figure 6(a) shows the relative orientation of the ski members 20 in the unloaded condition. In normal use, the body weight of the user urges the ski members 20 outwards, as shown in Figure 6(b), such that the ski members 20 are arranged substantially orthogonal to the plane of the seat portions 34. Under compression, as shown in Figure 6(c), the ski members 20 are splayed outwards, against the action of the straps 50,52 which exert a restoring force helping to return the sledge to the orientation of Figure 6(b).

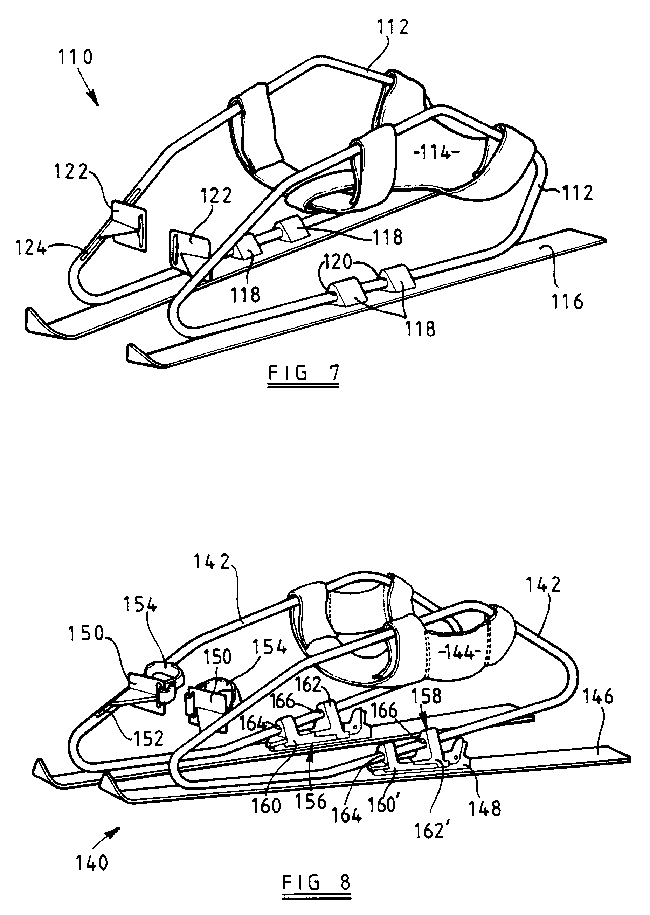

Seat portion 34 is preferably a rigid structure according to the embodiments already described herein, but may alternatively comprise a flexible "sling" suspended between the support rails 26, which may be separate from, or alternative to the link portion, as will be described with reference to Figures 7 to 10. A harness may be included to retain the user in the seat.

With reference now to Figure 7, there is shown a further embodiment of a sledge 110 according to the present invention, which comprises a seat portion 114, and a pair of ski members each comprising a frame member 112 and a ski 116. Each ski 116 is provided with two formations 118 rigid therewith. The formations 118 are each provided with an aperture 120; the apertures 120 of the two formations 118 on the same ski 116 are substantially coaxial.

The frame members 112 comprise aluminium tubing (or other suitable material) which extends through the apertures 120. The frame members 112 may be welded on the formations 118 in order to provide a rigid connection between the frame members 112 and the skis 116. Thus, the two formations 118 act as securing means to secure the frame members 112 to the skis 116.

As an alternative to welding, each formation 118 may be provided in two parts connected by a screw which can be tightened to clamp the parts together in order to clamp the frame member 112 frictionally thereto.

Each frame member 112 is provided with a foot rest 122 which is adjustably mounted to a respective slot 124 in each frame member 112. The foot rests 122 may be provided with straps (not shown in Figure 7).

The seat portion 114 may include a harness into which the user may strap himself (not shown).

The seat portion 114 may provide the only connection between the frame members 112 and is flexible. Thus, the seat portion 114 provides the function of the link portion described with reference to other embodiments and therefore provides the flexible connection between the ski members 116, so that they can move relative to one another.

In Figure 8 a further embodiment of sledge according to the invention is generally designated 140.

The sledge 140 comprises a seat portion 144 and two ski members each of which include a ski 146 and a frame member 142. Each ski 146 is of conventional type and provided with a conventional ski-boot receiving formation 148.

Each frame member 142 is provided with a foot rest 150 which is adjustably mounted in a respective slot 152 in the frame member. The foot rests 150 are provided with straps 154.

The seat portion 144 may include a harness into which the user may strap himself.

The seat portion 144 may provide the only connection between the frame members 142 and is flexible. Thus, the seat portion 144 provides the function of the link portion described with reference to other embodiments and therefore provides the flexible connection between the skis 146, so that they can move relative to one another.

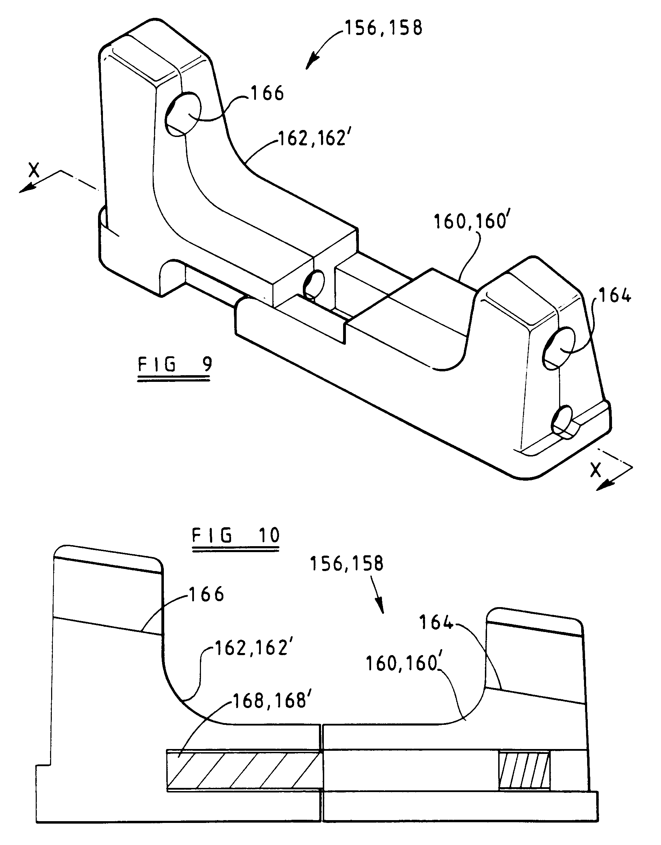

The frame members 144 are secured to the skis 146 by securing means 156 and 158 (see Figures 9 and 10). The securing means 156 and 158 are identical and each comprises two relatively slidable securing members 160, 162 and 160', 162' respectively.

The members 160 and 160' are each provided with an aperture 164, whilst the members 162 and 162' are each provided with an aperture 166.

The frame members 142 comprise aluminium tubing which extends through the apertures 164 and 166. The members 160 and 160' are fixedly secured to the frame members 142, for example by welding. The members 162 and 162' are slidable on the frame members 142.

As an alternative, each of the securing members 160, 160', 162 and 162' may be provided in two parts connected by a screw which can be tightened to clamp the two parts together in order to clamp the frame member 142 frictionally thereto. When it is desired to adjust the position of the securing members, the screws can be loosened.

The members 160 and 162 are mounted to a screw-threaded member 168 (not shown in Figure 9) whilst the members 160' and 162' are each mounted to a screw-threaded member 168'. Rotation of the screw-threaded member 168 causes the member 162 to slide relative to the member 160 and the frame member 142. Rotation of the screw-threaded member 168' causes the member 162' to slide relative to the member 160' and the frame member 142.

The adjustable nature of the securing means 156 and 158 (by virtue of the screw-threaded members 168 and 168') enables the frame members 142 to be secured to the skis 146 irrespective of the size of the ski boot receiving formation 148.

In the embodiment shown in Figures 8 to 10 the skis 146 are removable from the body. The skis 146 are entirely conventional and can be worn by a person wearing normal ski boots.

When the user of the sledge 140 reaches the bottom of a slope, the frame member 142 can be removed from the skis 146 and the user can put on the skis 146 to climb back up the slope. The frame members and seat portion can be folded, and are easily carried due to their lightweight construction.

The absence of a rigid connection between the skis 116 or 146 enables the user to control the skis using his body weight. The sledges 110 and 140 are controlled using skills similar to the skills required in skiing.

## Claims

1. A sledge (10) comprising two elongate ski members (20) having forward and rearward ends, said ski members (20) being held in spaced-apart, side-by-side relationship and coupled together at a point intermediate said forward and rearward ends by a connecting device (32) which serves as a seat for the user characterised in that said connecting device (32) is flexible and said forward and rearward ends of said ski members (20) are not coupled together, the arrangement being such that, in use, one ski member (20) may be moved relative to the other by the user shifting his bodyweight and thereby flexing the flexible connecting device (32).

2. A sledge according to claim 1, wherein each ski member (20) includes means (28) for retaining the feet of a user, forward of said connecting device (32).

3. A sledge according to claim 1 or claim 2, including means (30) for varying the position of said connecting device relative to the long axis of each ski member.

4. A sledge according to any one of claims 1 to 3, wherein said connecting device includes a universal joint.

5. A sledge according to any one of claims 1 to 3, wherein said connecting device (32) includes a strip of flexible material.

6. A sledge according to claim 1, wherein said flexible connecting device comprises a first seat portion (34) attached to a first ski member (20), and a second seat portion (34) attached to a second ski member (20).

7. A sledge according to any one of claims 1 to 6, wherein said ski members (20) each include a surface for contact with the ground whose width is tapered for at least part of the length of the ski member (20).

8. A sledge according to claim 1, comprising first and second elongate ski members (20) having forward and rearward ends, said first and second elongate ski members (20) having respective first and second support rails (26) upwardly spaced therefrom and substantially parallel thereto, respective first and second seat members (34) being rigidly secured to said first and second support rails (26), said first and second seat members (34) extending inwardly towards each other and being connected by a flexible coupling (32), said forward and rearward ends of said ski members (20) not being so coupled together, the arrangement being such that, in use, said first and second ski members (20) are movable relative to each other by the user shifting his bodyweight and thereby flexing the flexible coupling (32).

## Patentansprüche

1. Schlitten (10), der zwei langgestreckte Skiglieder (20) mit vorderen und hinteren Enden umfasst, wobei die Skiglieder (20) in einem beabstandeten, nebeneinanderliegenden Verhältnis gehalten werden, und durch eine Verbindungseinrichtung (32) an einer Stelle zwischen den vorderen und hinteren Ende aneinandergekuppelt sind, welches als ein Sitz für den Benutzer dient, dadurch gekennzeichnet, dass die Verbindungseinrichtung (32) elastisch ist, und die vorderen und hinteren Enden der Skiglieder nicht aneinandergekuppelt sind, wobei die Anordnung derart ist, dass ein Skiglied (20) während der Benutzung relativ zu dem anderen bewegt werden kann, indem der Benutzer sein Körpergewicht verschiebt, und dabei die elastische Verbindungseinrichtung (32) biegt.

2. Schlitten nach Anspruch 1, in dem jedes Skiglied (20) ein Mittel (28) einschliesst, um die Füsse eines Benutzers vor der Verbindungseinrichtung (32) zu halten.

3. Schlitten nach Anspruch 1 oder Anspruch 2, der ein Mittel (30) einschliesst, um die Stellung der Verbindungseinrichtung relativ zu der langen Achse von jedem Skiglied zu ändern.

4. Schlitten nach einem der Ansprüche 1 bis 3, in dem die Verbindungseinrichtung ein Universalgelenk einschliesst.

5. Schlitten nach einem der Ansprüche 1 bis 3, in dem die Verbindungseinrichtung (32) einen Streifen aus elastischem Material einschliesst.

6. Schlitten nach Anspruch 1, in dem die elastische Verbindungseinrichtung ein erstes Sitzteil (34) umfasst, das an einem ersten Skiglied (20) befestigt ist, und ein zweites Sitzteil (34), das an einem zweiten Skiglied (20) befestigt ist.

7. Schlitten nach einem der Ansprüche 1 bis 6, in dem die Skiglieder (20) jeweils eine Oberfläche zur Berührung mit dem Boden einschliessen, deren Breite für wenigstens ein Teil der Länge des Skigliedes (20) zugespitzt ist.

8. Schlitten nach Anspruch 1, der erste und zweite langgestreckte Skiglieder (20) mit vorderen und hinteren Enden umfasst, wobei die ersten und zweiten langgestreckten Skiglieder (20) jeweils erste und zweite Tragschienen (26) haben, die nach oben davon beabstandet sind, und im wesentlichen parallel dazu sind, jeweils erste und zweite Sitzglieder (34), die fest an den ersten und zweiten Tragschienen (26) befestigt sind, wobei die ersten und zweiten Sitzglieder (34) sich nach innen zueinander erstrecken und durch eine elastische Kupplung (32) verbunden sind, wobei die vorderen und hinteren Enden der Skiglieder (20) nicht so zusammengekuppelt sind, wobei die Anordnung derart ist, dass die ersten und zweiten Skiglieder (20) während der Benutzung relativ zueinander bewegt werden können, indem der Benutzer sein Körpergewicht verschiebt, und dabei die elastische Kupplung (32) biegt.

## Revendications

1. Traîneau (10) comportant deux éléments ski en longueur (20) comportant des extrémités avant et arrière, lesdits éléments ski (20) étant retenus en rapport équidistant et accouplé en un point intermédiaire desdites extrémités avant et arrière par un dispositif connecteur (32) servant de siège à l'utilisateur caractérisé en ce que ledit dispositif connecteur 32 est flexible et lesdites extrémités avant et arrière des éléments ski (20) ne sont pas accouplées, l'agencement étant tel qu'en service un élément ski (20) peut être décalé par rapport à l'autre par un déplacement du poids corporel de l'utilisateur ayant pour effet la flexion du dispositif connecteur flexible (32).

2. Traîneau selon la revendication 1, selon laquelle chaque élément ski (20) comporte des moyens (28) pour retenir les pieds de l'utilisateur en avant dudit dispositif connecteur (32).

3. Traîneau selon la revendication 1 ou la revendication 2, comportant en outre des moyens (30) permettant de varier la position dudit dispositif connecteur par rapport à l'axe longitudinal de chaque élément ski.

4. Traîneau selon l'une ou l'autre des revendications 1 à 3, selon lesquelles ledit dispositif connecteur comportent un joint à cardan.

5. Traîneau selon l'une ou l'autre des revendications 1 à 3, selon laquelle ledit dispositif connecteur (32) prévoit une longueur de matière flexible.

6. Traîneau selon la revendication 1, selon laquelle ledit dispositif connecteur flexible comporte une première pièce de siège (34) attachée à un premier élément ski (20), et une deuxième pièce de siège (34) attachée à un deuxième élément ski (20).

7. Traîneau selon l'une ou l'autre des revendications 1 à 6, selon laquelle lesdits éléments ski (20) prévoient chacun une surface de contact avec le sol dont la largeur diminue progressivement sur une partie au minimum de la longueur d'élément ski (20).

8. Traîneau selon la revendication 1, comportant des premier et deuxième élément en longueur ayant des extrémités avant et arrière, lesdits premier et deuxième élément ski en longueur (20) ayant des premier et deuxième rails respectifs (26) qui s'en écartent en remontant et leur sont essentiellement parallèles, lesdits premier et deuxième éléments de siège (34) étant fixés rigides auxdits premier et deuxième rails (26), ledit premier et deuxième éléments de siège (34) étant allongés intérieurement l'un vers l'autre et reliés par un accouplement flexible (32), lesdites extrémités avant et arrière desdits éléments ski (20) n'étant pas ainsi accouplés, l'agencement .tant tel qu'en service, lesdits premier et deuxième éléments (20) sont mobiles l'un par rapport à l'autre suite au déplacement par l'utilisateur de son poids corporel l'accouplement flexible (32) étant ainsi l'objet d'une flexion.
